# EUROPEAN PATENT SPECIFICATION

(11) **EP 1 213 651 B1**
(45) Date of publication and mention of the grant of the patent: **01.04.2009**
(21) Application number: 01204264.4
(22) Date of filing: 09.11.2001
(51) Int. Cl.: G06F 11/14, G06F 11/20

(54) **Data mirroring restoration in a distributed system**
Datenspiegelungsherstellung in einem verteilten System
Rétablissement de miroitage de données dans un système distribué

(30) Priority: 12.11.2000 IL 13962800
(43) Date of publication of application: 12.06.2002
(73) Proprietor: ECI Telecom Ltd., Petach-Tikva 49517 (IL)
(72) Inventor: Katz, Igor, Rosh Haayin 48056 (IL); Kharif, Alexander, Netanya 42445 (IL); Vainshtein, Alexander, Lod 71402 (IL); Shimelmits, Alexander, Rishon Lezion 75498 (IL)
(74) Representative: Curell Aguilà, Marcelino

(56) References cited:
- EP-A- 0 405 859
- WO-A-99/17201
- US-A- 5 596 706
- US-A- 5 958 062

## Description

### Field of the Invention

The invention is in the field of data mirroring restoration in a distributed system in general, and in a telecommunication network management system in particular.

### Background of the Invention

Telecommunication network management systems are distributed systems including one or more management layers of client/server architectures in which a server manages a master volume of data containing a multitude of data objects each including one or more attributes each having a prevailing value, and its clients each manage a volume of data mirroring the master volume of data. A temporary communication downtime between a server and a client can potentially lead to a discrepancy between the client's volume of data and the master volume of data on its reconnection to the server. In the affirmative, this necessitates that the freshly reconnected client's volume of data be resynchronized to the master volume of data prior to resumption of full service.

One approach for data mirroring restoration at a freshly reconnected client involves an automatic complete upload of the prevailing values of all the attributes of all the data objects from the master volume of data to the client's volume of data on its reconnection to the server. This approach affords complete data mirroring consistency at a freshly reconnected client, however, it is relatively slow since it effectively requires the reformatting of a freshly reconnected client's volume of data.

Another approach also affording complete data mirroring consistency at a freshly reconnected client is based on the discrimination of those data objects updated during a communication downtime period Tₑ-Tₛ where Tₑ is the end of the communication downtime period and Tₛ is the start of the communication downtime period. This approach is enabled by the server managing a data structure listing a time signature in respect of each and every data object in its master volume of data specifying the time of the last occurrence of an alteration of the prevailing value of one of its attributes. This approach is again relatively slow since it requires a decision to be made in respect of each and every data object in the master volume of data, and moreover, the additional data structure imposes additional storage requirements at the server which is a scarce resource.

Document US 5.596.706 describes an online system which is provided with a backup computer center (sub-online system) in addition with an original computer center (main online system) in order to improve the reliability of the online system. With respect to the database, the main online system is provided with an original database (main database) while the sub-online system is provided with a backup database (sub-database) which is a duplicate of the main database. The main online system and the sub-online system are connected through a transmission path. Information on an update performed in the main database is transferred to the sub-online system through the transmission path to thereby update the sub-database in a manner similar to the main database. Terminal units are normally connected to the main online system, wherein the main database is updated by transactions inputted from the terminals. When a failure occurs in the main online system, the terminals are changed over to be connected to the sub-online system to allow transaction processing to be continued. Further, there are provided a control system for synchronizing contents between the main database and the sub-database when the original computer center is changed over to the backup computer center, a recovery system for recovering the main database or the sub-database from failures and an integration system for integrating both the main database and the sub-database when they are independently updated due to a failure in the transmission path or the like.

### Summary of the Invention

In accordance with the present invention, there is provided a method for data mirroring restoration at a client freshly reconnected to the server after a communication downtime period, for use in a distributed system including a server managing a master volume of data including a plurality of at least one static attribute and at least one dynamic attribute whose prevailing values in the master volume of data are respectively updated and not updated as a consequence of a command from a client, and at least two clients C1 and C2 each managing a volume of data intended to mirror the master volume of data, the method comprising the steps of:
(a) storing prevailing values of dynamic attributes of the master volume of data in temporary storage at the server;
(b) storing prevailing values of static attributes of the master volume of data in persistent storage at the server;
(c) providing the server with a master synchronization counter V_{S} incremented by the updating of the prevailing values of one or more static attributes in the master volume of data as a consequence of a command from a first client C1 of the at least two clients;
(d) providing each client with a synchronization counter V_{C}, the synchronization counter V_{C2} of a second client C2 of the at least two clients only being synchronized with the master synchronization counter VS on the successful uploading of the prevailing values of the static attributes updated in the master volume of data as a consequence of the command from the first client C1 whereby its volume of data mirrors the master volume of data; and
(e) uploading from the master volume of data to the freshly reconnected client's volume of data, the prevailing values of all its dynamic attributes and, in the case that its synchronization counter V_{C2}<V_{S}, the prevailing values of at least all of its static attributes whose prevailing values were updated during the communication downtime period, otherwise in the case that V_{S}=V_{C2} taking no data mirroring restoration action in respect of the static attributes.

The present invention is based on the notion that by classifying the attributes stored in a server's master volume of data into two different types, thereby enabling different uploading strategies, data mirroring restoration can be expedited without the downside of excessive storage requirements, excessive computational loads, and the like. The present invention is particularly suitable for data mirroring restoration in telecommunication network management systems since they typically include thousands of data objects, and many thousands of attributes.

### Brief Description of the Drawings

In order to understand the invention and to see how it can be carried out in practice, preferred embodiments will now be described, by way of a non-limiting examples only, with reference to the accompanying drawings, in which similar parts are likewise numbered, and in which:
Fig. 1 is a schematic representation of a telecommunication network management system constructed and operative in accordance with the present invention;
Figs. 2A and 2B are schematic representations showing the management of a transaction log kept by a server of the telecommunication network management system of Figure 1;
Figs. 3A and 3B are a flow diagram of the uploading of the prevailing values of static attributes from a server's master volume of data to a freshly reconnected client's volume of data in accordance with the data mirroring restoration method of the present invention; and
Fig. 4 is a flow diagram of a degenerate version of the data mirroring restoration method of Figures 3A and 3B.

### Detailed Description of the Drawings

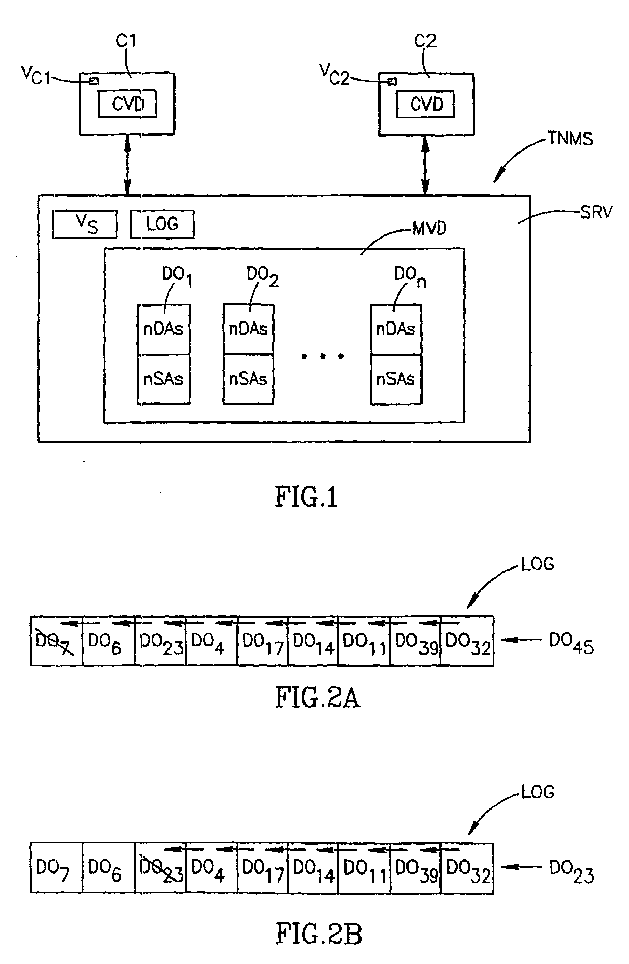

Figure 1 shows a Telecommunication Network Management System denoted TNMS including two Element Management System (EMS) workstations (constituting two clients denoted C1 and C2) connected to a Network Element (NE) workstation (constituting a server denoted SRV).

The NE workstation manages a master volume of data denoted MVD including a total of n data objects DO₁, DO₂, ..., DOₙ each including a total of n dynamic attributes DA₁, DA₂, ..., DAₙ and a total of n static attributes SA₁, SA₂, ..., SAₙ. The prevailing values of the dynamic attributes are stored in temporary storage, and are not updated as a consequence of a command from one of the clients. The prevailing values of the static attributes are stored in persistent storage, and are updated as a consequence of a command from one of the clients. The NE workstation keeps a master synchronization counter V_{S} which is incremented on each occurrence of the updating of one or more static attributes of a data object. The NE workstation keeps a stack-like transaction log denoted LOG for storing up to N data object identifiers in a First In First Out (FIFO) in respect of the updating of the prevailing values of one or more of their static attributes. The pushing of a new data object onto the transaction log when full automatically causes the deletion of the oldest data object in the transaction log as depicted in Figure 2A showing a new DO₄₅ listing pushing the oldest DO₇ listing out of the transaction log. The one exception to this FIFO rule is that the pushing of a new data object onto the transaction log when full automatically causes a previous listing of the same data object to be deleted as depicted in Figure 2B in respect of two DO₂₃ listings. This is because the transaction log needs only list a single data object once since the prevailing values of all the static attributes of a data object are uploaded together, and therefore additional listings would be superfluous.

Each EMS workstation manages a volume of data denoted CVD which is intended to mirror the NE workstation's master volume of data, and keeps a synchronization counter V_{C} which is synchronized with the master synchronization counter V_{S} in one of two different ways as follows: In the case an EMS workstation is the source of a command updating one or more static attributes in the master volume of data, then its synchronization counter V_{C} is synchronized with the master synchronization counter V_{S} when the prevailing values at the NE workstation have been successfully updated as a consequence of the command. Against this, in the case that an EMS workstation is not the source of a command updating one or more static attributes in the master volume of data, then its synchronization counter V_{C} is only synchronized with the master synchronization counter V_{S} after its volume of data mirrors the master volume of data. Or, in other words, after it has successfully uploaded the prevailing values of the static attributes updated as a consequence of a command from another EMS workstation.

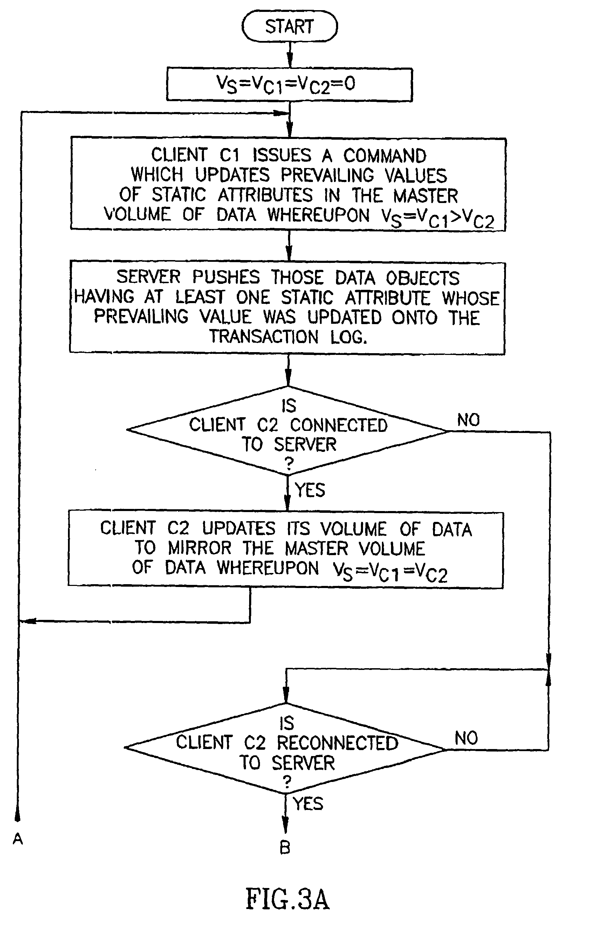

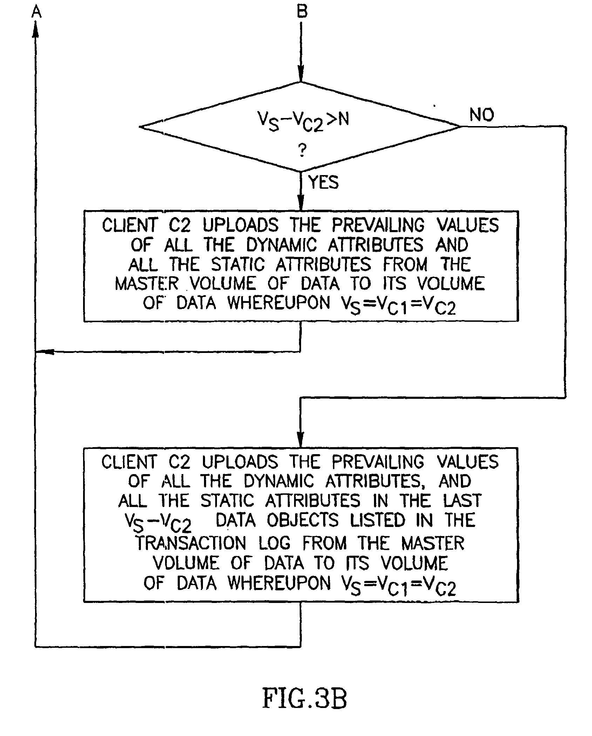

Figures 3A and 3B show that reconnection of the client V_{C2} to the server can lead to one of three possible uploads from the server's master volume of data to its volume of data as follows: First, a complete upload of the prevailing values of all the dynamic attributes and all the static attributes in the case that V_{S}-V_{C2}>N. Second, a partial upload of the prevailing values of all the dynamic attributes, and all the static attributes of the last V_{S}-V_{C} data objects listed in the transaction log in the case that V_{S}-V_{C2}≤N. And third, a partial upload of the prevailing values of all the dynamic attributes but none of the static attributes in the case that V_{S}=V_{C2}.

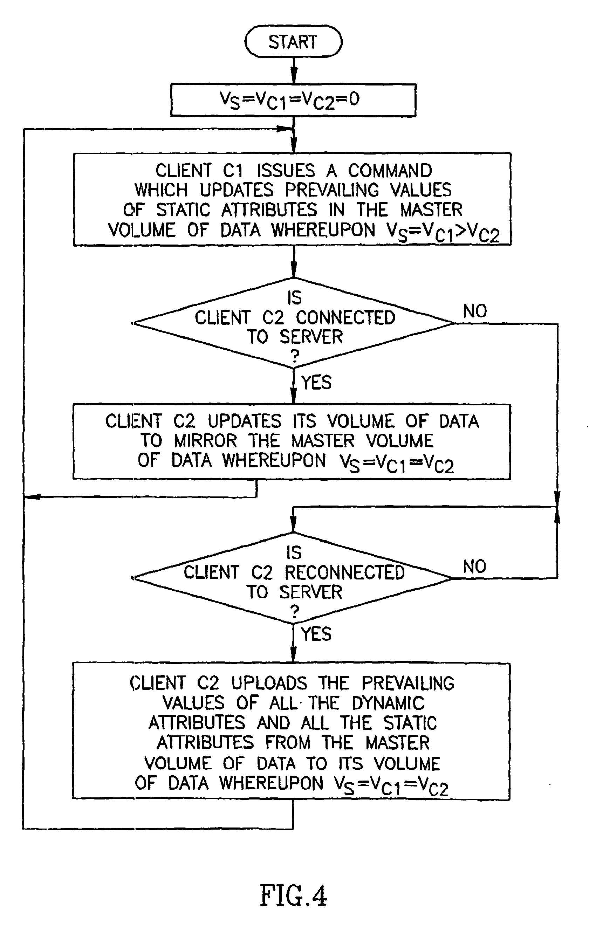

Figure 4 shows that without the benefit of the transaction log, the data mirroring restoration method of the present invention degenerates to the complete upload in the case that V_{S}>V_{C2}, or a partial upload of the prevailing values of all the dynamic attributes but none of the static attributes in the case that V_{S}=V_{C2}. It should be noted that in such a degenerate version, the master synchronization counter V_{S} and the synchronization counters V_{C} may count attributes instead of data objects since the outcome of the decision as whether to upload the prevailing attributes of all the static attributes in the master volume of data or not will be the same in both cases.

While the invention has been described with respect to a limited number of embodiments, it will be appreciated that many variations, modifications, and other applications of the invention can be made within the scope of the appended claims.

## Claims

1. A method for data mirroring restoration at a client freshly reconnected to the server after a communication downtime period, for use in a distributed system including a server managing a master volume of data including a plurality of data objects, each containing at least one static attribute and at least one dynamic attribute and at least two clients C1 and C2 each managing a volume of data intended to mirror the master volume of data, and wherein the prevailing values of said at least one static attribute in the master volume of data are updated as a consequence of a command from at least one of said at least two clients C1 and C2, and the prevailing values of said at least one dynamic attribute in the master volume of data are not updated as a consequence of a command from at least one of said at least two clients C1 and C2, the method **characterised in that** it comprises the steps of:
(a) storing prevailing values of dynamic attributes of the master volume of data in temporary storage at the server;
(b) storing prevailing values of static attributes of the master volume of data in persistent storage at the server
(c) providing the server with a master synchronization counter V_{S} incremented by the updating of the prevailing values of one or more static attributes in the master volume of data as a consequence of a command from a first client C1 of the at least two clients;
(d) providing each client with a synchronization counter V_{C}, the synchronization counter V_{C2} of a second client C2 of the at least two clients only being synchronized with the master synchronization counter V_{S} on the successful uploading of the prevailing values of the static attributes updated in the master volume of data as a consequence of the command from the first client C1 whereby its volume of data mirrors the master volume of data; and
(e) uploading from the master volume of data to the freshly reconnected client's volume of data, the prevailing values of all its dynamic attributes and, in the case that its synchronization counter V_{C2}<V_{S}, the prevailing values of at least all of its static attributes whose prevailing values were updated during the communication downtime period, otherwise in the case that V_{S}=V_{C2}, taking no data mirroring restoration action in respect of the static attributes.

2. The method according to claim 1 wherein step (e) includes the uploading the prevailing values of all the static attributes from the master volume of data to the freshly reconnected client's volume of data in the case that its synchronization counter V_{C2}<V_{S}.

3. The method according to claim 1 wherein step (c) includes providing the server with a transaction log for listing upto N data object identifiers of data objects containing at least one static attribute on a First In First Out (FIFO) basis in respect of the updating of the prevailing values of one or more of their static attributes, and step (e) includes the uploading from the master volume of data to the freshly reconnected client's volume of data the prevailing values of either all the static attributes in the case that V_{S}-V_{C2}>N, or all the static attributes of the last V_{S}-V_{C2} data objects listed in the transaction log in the case that V_{S}-V_{C2}≤N.

4. The method according to claim 3 further comprising the step of:
(f) when the transaction log is full, deleting an earlier listing of a data object therefrom, if it exists, on adding the same data object thereto, whereby the transaction log contains at most only a single listing of a data object, if at all.

5. A computer program adapted to carry out the method according to any one of claims 1 to 4.

6. A telecommunication network system adapted to carry out the method according to any one of claims 1 to 4.

## Patentansprüche

1. Verfahren zur Wiederherstellung einer Datenspiegelung bei einem Client, der nach einer Kommunikationsausfallszeit erneut mit dem Server verbunden ist, zur Verwendung in einem verteilten System umfassend einen Server, der ein Hauptdatenvolumen verwaltet mit einer Vielzahl Datenobjekte, von denen jedes wenigstens ein statisches Attribut und wenigstens ein dynamisches Attribut enthält, und wenigstens zwei Clients C1 und C2, die jeweils ein Datenvolumen verwalten, vorgesehen als Spiegelung des Hauptdatenvolumens, und wobei die derzeitigen Werte des wenigstens einen statischen Attributs im Hauptdatenvolumen als Folge eines Befehls von wenigstens einem der wenigstens zwei Clients C1 und C2 aktualisiert werden und die derzeitigen Werte des wenigstens einen dynamischen Attributs im Hauptdatenvolumen nicht als Folge eines Befehls von wenigstens einem der wenigstens zwei Clients C1 und C2 aktualisiert werden, wobei das Verfahren **dadurch gekennzeichnet ist, dass** es die Schritte umfasst:
a) Speichern derzeitiger Werte von dynamischen Attributen des Hauptspeichervolumens in temporärem Speicher beim Server;
b) Speichern derzeitiger Werte von statischen Attributen des Hauptspeichervolumens in beständigem Speicher beim Server;
c) Versehen des Servers mit einem Hauptsynchronisationszähler V_{S}, der erhöht wird beim Aktualisieren der derzeitigen Werte eines oder mehrerer statischer Attribute im Hauptdatenvolumen als Folge eines Befehls von einem ersten Client C1 der wenigstens zwei Clients;
d) Versehen jedes Clients mit einem Synchronisationszähler V_{C}, wobei der Synchronisationszähler V_{C2} eines zweiten Clients C2 der wenigstens zwei Clients mit dem Hauptsynchronisationszähler V_{S} nur synchronisiert wird im Falle des erfolgreichen Hochladens der derzeitigen Werte der statischen Attribute, die im Hauptdatenvolumen aktualisiert werden als Folge des Befehls vom ersten Client C1, wobei sein Datenvolumen das Hauptdatenvolumen spiegelt; und
e) Hochladen vom Hauptdatenvolumen zum Datenvolumen des erneut verbunden Clients der derzeitigen Werte aller seiner dynamischen Attribute und, falls sein Synchronisationszähler V_{C2}<V_{S} ist, der derzeitigen Werte wenigstens aller seiner statischen Attribute, deren derzeitige Werte während der Kommunikationsausfallzeit aktualisiert wurden, ansonsten wird falls V_{S}=V_{C2} ist keine Maßnahme zur Wiederherstellung der Datenspiegelung hinsichtlich der statischen Attribute ergriffen.

2. Verfahren nach Anspruch 1, wobei Schritt (e) das Hochladen der derzeitigen Werte aller statischen Attribute vom Hauptdatenvolumen zum Datenvolumen des erneut verbundenen Clients umfasst, falls sein Synchronisationszähler V_{C2}< V_{S} ist.

3. Verfahren nach Anspruch 1, wobei Schritt (c) ein Versehen des Servers mit einem Transaktionsprotokoll umfasst zur Auflistung von bis zu N Datenobjektkennungen von Datenobjekten, die wenigstens ein statisches Attribut enthalten, gemäß einem Prinzip First-In First-Out (FIFO) hinsichtlich des Aktualisierens der derzeitigen Werte eines oder mehrerer ihrer statischen Attribute, und wobei Schritt (e) das Hochladen umfasst vom Hauptdatenvolumen zum Datenvolumen des erneut verbundenen Clients der derzeitigen Werte von entweder allen statischen Attributen, falls V_{S}-V_{C2}>N ist, oder aller statischen Attribute der letzten V_{S}-V_{C2} im Transaktionsprotokoll aufgelisteten Datenobjekte, falls V_{S}-V_{C2}≤N ist.

4. Verfahren nach Anspruch 3, ferner umfassend den Schritt:
(f) wenn das Transaktionsprotokoll voll ist, Löschen daraus einer früheren Auflistung eines Datenobjekts, falls es bei einem Hinzufügen desselben Datenobjekts existiert, wodurch das Transaktionsprotokoll wenn überhaupt nur eine einzelne Auflistung eines Datenobjekts enthält.

5. Computerprogramm, das zum Ausführen des Verfahrens nach einem der Ansprüche 1 bis 4 ausgebildet ist.

6. Telekommunikationsnetzwerksystem, das zum Ausführen des Verfahrens nach einem der Ansprüche 1 bis 4 ausgebildet ist.

## Revendications

1. Procédé de rétablissement de miroitage de données au niveau d'un client récemment reconnecté au serveur après une période d'arrêt de communication, pour une utilisation dans un système distribué comprenant un serveur gérant un volume de données maître comprenant une pluralité d'objets de données, contenant chacun au moins un attribut statique et au moins un attribut dynamique, et au moins deux clients C1 et C2 gérant chacun un volume de données destiné à être le miroir du volume de données maître, et dans lequel les valeurs actuelles dudit au moins un attribut statique dans le volume de données maître sont mises à jour en conséquence d'une commande provenant d'au moins l'un desdits au moins deux clients C1 et C2, et les valeurs actuelles dudit au moins un attribut dynamique dans le volume de données maître ne sont pas mises à jour en conséquence d'une commande provenant d'au moins l'un desdits au moins deux clients C1 et C2,
le procédé étant **caractérisé en ce qu'**il comprend les étapes consistant à :
(a) mémoriser les valeurs actuelles des attributs dynamiques du volume de données maître dans une mémoire temporaire au niveau du serveur ;
(b) mémoriser les valeurs actuelles des attributs statiques du volume de données maître dans une mémoire persistante au niveau du serveur ;
(c) pourvoir le serveur d'un compteur de synchronisation maître V_{S} incrémenté par la mise à jour des valeurs actuelles d'un ou de plusieurs attributs statiques dans le volume de données maître en conséquence d'une commande provenant d'un premier client C1 parmi lesdits au moins deux clients ;
(d) pourvoir chaque client d'un compteur de synchronisation V_{C}, le compteur de synchronisation V_{C2} d'un deuxième client C2 parmi lesdits au moins deux clients n'étant synchronisé qu'avec le compteur de synchronisation maître V_{S} lors du téléchargement réussi des valeurs actuelles des attributs statiques mises à jour dans le volume de données maître en conséquence de la commande provenant du premier client C1, moyennant quoi son volume de données est le miroitage du volume de données maître ; et
(e) télécharger, du volume de données maître vers le volume de données du client récemment reconnecté, les valeurs actuelles de tous ses attributs dynamiques et, dans le cas où son compteur de synchronisation V_{C2}<V_{S}, les valeurs actuelles d'au moins la totalité de ses attributs statiques dont les valeurs actuelles ont été mises à jour pendant la période d'arrêt de communication, autrement, dans le cas où V_{S}=V_{C2}, n'entreprendre aucune action de rétablissement de miroitage de données en relation avec les attributs statiques.

2. Procédé selon la revendication 1, dans lequel l'étape (e) comprend le téléchargement des valeurs actuelles de tous les attributs statiques du volume de données maître vers le volume de données du client récemment reconnecté dans le cas où son compteur de synchronisation V_{C2}<V_{S}.

3. Procédé selon la revendication 1, dans lequel l'étape (c) comprend le fait de pourvoir le serveur d'un journal de transactions pour contenir jusqu'à N identifiants d'objet de données des objets de données contenant au moins un attribut statique sur une base premier entré - premier sorti (FIFO) en relation avec la mise à jour des valeurs actuelles d'un ou de plusieurs de leurs attributs statiques, et l'étape (e) comprend le téléchargement du volume de données maître vers le volume de données du client récemment reconnecté des données actuelles soit de tous les attributs statiques dans le cas où V_{S}-V_{C2}>N, soit de tous les attributs statiques des V_{S}-V_{C2} derniers objets de données énumérés dans le journal de transactions dans le cas où V_{S}-V_{C2}≤N.

4. Procédé selon la revendication 3 comprenant en outre l'étape consistant à :
(f) lorsque le journal de transactions est plein, supprimer une énumération précédente d'un objet de données de celui-ci, si elle existe, lors de l'ajout du même objet de données à celui-ci, moyennant quoi le journal de transactions ne contient au plus qu'une seule énumération d'un objet de données, s'il yen a.

5. Programme informatique adapté pour exécuter le procédé selon l'une quelconque des revendications 1 à 4.

6. Système de réseau de télécommunication adapté pour mettre en oeuvre le procédé selon l'une quelconque des revendications 1 à 4.
